# EUROPÄISCHE PATENTSCHRIFT

(11) **EP 2 659 241 B1**
(45) Veröffentlichungstag und Bekanntmachung des Hinweises auf die Patenterteilung: **18.10.2017**
(21) Anmeldenummer: 11805850.2
(22) Anmeldetag: 22.12.2011
(51) Int. Cl.: G01F 23/44, G01F 23/00, G01F 23/46

(54) **ELEKTROMECHANISCHES FÜLLSTANDSMESSGERÄT**
ELECTROMAGNETIC FLUID LEVEL SENSOR
APPAREIL ÉLECTROMÉCANIQUE DE MESURE DE NIVEAU

(30) Priorität: 31.12.2010 DE 102010056511
(43) Veröffentlichungstag der Anmeldung: 06.11.2013
(73) Patentinhaber: Endress+Hauser GmbH+Co. KG, 79689 Maulburg (DE)
(72) Erfinder: BRUTSCHIN, Wolfgang, 79650 Schopfheim (DE); KAISER, Andreas, 400-0288 Yamanashi (JP); SAWITZKI, Carmen, 79585 Steinen (DE); OKAZAKI, Keita, Yamanashi Yamanashi 408-0018 (JP)
(74) Vertreter: Andres, Angelika Maria
(86) Internationale Anmeldenummer: PCT/EP2011/073879
(87) Internationale Veröffentlichungsnummer: WO 2012/089635

(56) Entgegenhaltungen:
- EP-A1- 0 473 366
- WO-A1-02/25616
- DE-A1- 3 721 164
- DE-A1- 19 730 196
- US-A1- 2002 167 384
- US-A1- 2010 148 505

## Beschreibung

Die Erfindung betrifft ein Elektromechanisches Füllstandmessgerät, enthaltend einen mittels eines Drahtes aufgehängten Schwimmer bzw. Verdrängerelement, der auf dem zu messenden Flüssigkeitsspiegel schwimmt, eine äußere Trommel mit einem äußeren Magnetring, eine innere Trommel mit einem inneren Magnetring und elektromagnetischen Messelementen die Magnetfeldverschiebung zwischen der inneren und äußeren Magnetring ermitteln und ein Messwert ausgeben, eine Messwelle, mit der die innere Trommel mechanisch fest verbunden, es ist eine Servomotor mit einer Antriebswelle, die mit der Messwelle über ein Getriebe gekoppelt ist, vorgesehen, der die die Messwelle in Abhängigkeit von einem aus dem Differenzwert der elektromagnetischen Messelemente ermittelten Steuerungssignal nachführt, so dass durch die von einer Änderung des zu messenden Flüssigkeitsniveaus erzeugten Relativbewegung zwischen dem äußeren und inneren Trommel der Differenzwert wieder auf Null zurückgeführt und aus Nachführung der aktuelle Füllstandsmesswert ermittelt wird

Verfahren und Vorrichtungen zur Füllstandmessung, die nach dem Senklotprinzip arbeiten, sind hinlänglich bekannt. Beispielsweise sind in den Dokumenten DE 21 51 094, DE 24 01 486 B2, DE-PS 819 923, DE 39 42 239 A1, US-PS 3,838,518, DE 195 43 352 A1, G 70 31 884.2, DE-PS 819 923, G 73 29 766.2, DE 19730196 A1, sowie DE 28 53 360 A1 Füllstandsmesssysteme zur hochgenaue Füllstandsbestimmung beschrieben, die nach dem Senklotprinzip arbeiten. Bei diesen Verfahren zur Füllstandmessung nach dem Senklotprinzip wird ein an einem Messseil hängendes Senklot auf das Füllgut bzw. Schüttgut abgesenkt. Beim Auftreffen auf das Füllgut wird die von der Seiltrommel abgespulte Länge des Messseiles ermittelt und an einer Anzeigevorrichtung die Füllstandshöhe bzw. die Füllmenge angezeigt. Für unterschiedliche Füllgüter werden zweckmäßigerweise unterschiedliche Senklot eingesetzt.

Das Hauptanwendungsgebiet der elektromechanischen Lotung liegt in der Füllstandmessung von sehr hohen Behältern, wo Lösungen mit anderen Messprinzipien sehr kostenintensiv oder aus physikalischen Gründen nicht möglich sind. Mit der elektromechanischen Lotung sind Füllstände in Behältern von derzeit bis zu etwa 70 m Höhe mit einer Genauigkeit von unter einem Millimeter messbar.

Ein Verfahren zur Füllstandmessung nach dem Senklotprinzip, bei dem die Seiltrommel und die Antriebsachse eines Elektromotors federnd miteinander gekoppelt sind, und bei welchem die Füllstandhöhe durch Zählen von beim Spulvorgang der Seiltrommel erzeugten Impulsen in einer Zähleinrichtung bestimmt wird, beschreibt die DE 31 49 220 A1 der Anmelderin. Bei dem dort beschriebenen Messverfahren wird das Auftreffen des Verdrängerelements auf das Füllgut vorteilhafterweise ohne die Betätigung von mechanischen Schaltgliedern festgestellt. Außerdem ist es bei dem dort beschriebenen Messverfahren nicht mehr notwendig, die elektrischen Eingangsgrößen des Elektromotors überwachen zu müssen. Da der Sensor über dem außerhalb des für das Füllgut bestimmten Raums angeordnet ist, unterliegt sein Aufbau nicht den für das Behälterinnere geltenden Anforderungen. Dies bedeutet, dass für die Mehrzahl von Füllgütern Sensoren mit geringerem Aufwand für die Kapselung eingesetzt werden können. Dies wird dadurch erreicht, dass die Seiltrommel und die mit dem Elektromotor verbundene Antriebswelle dank der Federkopplung relativ zueinander zwischen zwei Endlagen um einen begrenzten Winkelbereich drehbar angeordnet sind. Die Seiltrommel und die Antriebsachse des Elektromotors sind jeweils mit Impulsgeberscheiben drehfest gekoppelt, welche von kontaktlosen Sensoren abgetastet werden. Wenn das Senklot auf die Füllgutoberfläche auftrifft, entfällt die vom Gewicht des Senklots im Messseil hervorgerufene Zugspannung.

Weitere Vorrichtungen zur Flüssigkeitsniveaumessung und Dichtebestimmung die nach dem Verdrängungsmessprinzip arbeiten sind aus der DE 37 21164 A1, DE2853360A1, DE 2401486 B2 und DE 2659416 A1 bekannt geworden.

Aus der DE2853360A1 ist ein Flüssigkeitsniveaumesser mit einem Verdrängungskörper bekannt. Dieser Verdrängungskörper ist mit einem Draht versehen, der auf einer Trommel auf- bzw. abgewickelt werden kann. Die Trommel wird durch eine Welle mit Hilfe eines Motors angetrieben, wobei eine Einrichtung zur Ermittlung der Veränderung des auf die Welle ausgeübten Drehmoments vorgesehen ist.

In der DE 2659416 A1 wird eine Vorrichtung zum Messen eines Flüssigkeitsspiegels beschrieben, bei welcher die Änderung des Flüssigkeitsspiegels in eine Drehbewegung umgesetzt wird. Ferner ist ein Magnetkopf an einem Arm vorgesehen, der sich entsprechend der Änderung des Flüssigkeitsspiegels dreht und dabei Magnetfelder abtastet, die durch am Umfang einer Scheibe angeordnete elektrische Leiter hervorgerufen werden.

Die DE 2401486 B2 offenbart ein Füllstand-Anzeigegerät nach den Verdrängungsmessprinzip, bei dem ein Seil auf einer Trommel ab- oder aufgewickelt wird, wobei eine Zählscheibe mitgedreht wird und dabei über Schutzgas-Kontaktschalter eine fortlaufende Impulsserie erzeugt, die ein Maß der gespendeten Seillänge ist.

Aus der DE 37 21164 A1 ist ein Füllstandsmessgerät bekannt, das einen Schwimmer and einem Draht enthält, der auf der Oberfläche einer nicht veranschaulichten Flüssigkeit schwimmt. Der Draht ist auf einer Trommel aufgewickelt und kann auf diese Trommel aufgespult oder von ihr abgespult werden. Mit dem Boden der Trommel ist eine Messwelle verbunden. Ändert sich das Flüssigkeitsniveau, auf dem der Schwimmer schwimmt, so ändert sich damit auch die vom Draht auf die Trommel ausgeübte Spannung. Diese Änderung der vom Draht ausgeübten Spannung wird über einen als Kupplungsteil wirkenden äußeren Magnetring in ein Drehmoment der Messwelle umgesetzt. Der zylindrische äußere Magnetring ist im Inneren der Trommel mit dem Boden verbunden. Magnetpole Süd- und Nordpole sind in Umfangsrichtung des äußeren Magnetringes abwechselnd angeordnet. An dem mit der Messwelle verbundenen inneren Magnetring sind magnetische Nord- und Südpole in gleicher Anzahl wie am äußeren Magnetring abwechselnd ausgebildet. Ein elektromagnetischer Wandler, z.B. ein Hall-Element ist am äußeren Umfang des inneren Magnetringes im Grenzbereich zwischen unter schiedlichen Magnetpolen angeordnet. Wird bei einer Änderung des zu messenden Flüssigkeitsniveaus eine Kraft erzeugt, die eine Relativbewegung zwischen dem äußeren und inneren Magnetring verursacht, so bewirkt eine Änderung des zwischen dem äußeren und inneren Magnetring vorhandenen magnetischen Flusses im elektromagnetischen Wandler ein elektrisches Signal, durch dass die Messwelle so gedreht wird, dass die Relativbewegung zwischen dem inneren und äußeren Magnetring wieder auf Null zurückgeführt und hierbei ein Messwert des erreichten Flüssigkeitsstandes gewonnen wird. Über einen an der Messwelle befindlichen Schleifkontakt wird das elektrische Signal des elektromagnetischen Wandlers in der Inneren Trommel an die Servomotorsteuerung übertragen. Dieser mechanische Abgriff hat den Nachteil, dass dieser nicht verschleißfrei erfolgt und durch den Reibungswiderstände eine Drehmomentsänderung erzeugt und somit Messungenauigkeiten auftreten können.

Der Erfindung liegt die Aufgabe zugrunde, eine Vorrichtung zur Füllstandmessung nach dem Verdrängungsmessprinzip auszugestalten, die sich durch einen einfachen Aufbau und niedrige Fertigungskosten auszeichnet, sowie hinsichtlich der mechanische Messempfindlichkeit und Messgenauigkeit zu verbessern.

Diese Aufgabe wird gelöst durch ein elektromechanisches Füllstandsmessgerät. Es enthält:
- einen Schwimmer bzw. Verdrängerelement, das mittels einem Draht abwickelbar zumindest mit einer äußeren Trommel verbunden ist,
- eine äußere Trommel mit einem äußeren Magnetring,
- eine innere Trommel mit einem inneren Magnetring und elektromagnetischen Messelementen, die eine Magnetfeldverschiebung zwischen der inneren und äußeren Magnetring ermitteln und ein Messwert ausgeben, wobei der innere Magnetring und der äußere Magnetring die äußere Trommel derart mit der inneren Trommel koppeln, um eine Rotation der inneren Trommel auf die äußere Trommel zu übertragen,
- eine Meßwelle, mit der die innere Trommel mechanisch fest verbunden,.
- Zudem ist ein Servomotor mit einer Antriebswelle, die mit der Messwelle über ein Getriebe gekoppelt ist, vorgesehen. Hierbei führt der Servomotor die Meßwelle in Abhängigkeit von einem aus dem Differenzwert der Messelemente ermittelten Steuerungssignal nach, so dass durch die von einer Änderung des zu messenden Flüssigkeitsniveaus erzeugten Relativbewegung zwischen dem äußeren und inneren Trommel der Differenzwert wieder auf Null zurückgeführt und aus Nachführung der aktuelle Füllstandsmesswert ermittelt wird.

Das Füllstandsmessgerät ist erfindungsgemäß dadurch gekennzeichnet,
dass eine Sensorelektronik zur Ermittlung des Steuerungssignals aus dem Differenzwert der elektromagnetischen Messelemente auf der Messwelle innerhalb der inneren Trommel angeordnet ist, und
dass ein radialer Rotationstransformator auf der Messwelle ausgestaltet ist, der zumindest die Steuerungssignale von der Sensorelektronik an die Hauptelektronik überträgt und zumindest die Sensorelektronik mit der notwendigen Energie versorgt.

Gemäß einer vorteilhaften Ausgestaltung der Erfindung ist der radial Rotationstransformator aus einer bifilar gewickelten Primärspule und einer bifilar gewickelten Sekundärspule ausgestaltet.

Gemäß einer Weiterbildung der Erfindung sind/ist die Übertragung des Steuerungssignals und/oder Kommunikationssignale zwischen der Sensorelektronik und einer Hauptelektronik mittels Frequenzumtastungsmodulation digital über den radialen Rotationstransformator ausgestaltet.

Gemäß einer vorteilhaften Weiterbildung erfolgt die Energieversorgung der Sensorelektronik mittels einer Gleichrichtung eines über den radialen Rotationstransformator eingespeisten Wechselsignals.

Gemäß einer vorteilhaften Ausgestaltung der Erfindung sind die Auswertung der Differenzwerte der elektromagnetischen Messelemente und die Berechnung der Steuerungssignals in der Sensorelektronik ausgestaltet und eine digitale Übertragung über den Rotationstransformator ist vorgesehen.

Gemäß einer weiteren Ausgestaltung umfasst die Sensorelektronik zumindest einen sekundäre Demodulator, einen sekundären Modulator und eine Spannungsversorgungseinheit.

Gemäß einer weiterführenden Ausgestaltung umfasst die Hauptelektronik zumindest einen primären Demodulator, einen primären Modulator und eine Oszillator.

Gemäß einer besonderen Ausgestaltung ist der primäre Modulator und der Oszillator in einem Mikroprozessor der Hauptelektronik integriert und/oder ausgestaltet.

Gemäß einer vorteilhaften Weiterbildung ist der primäre Demodulator in der Hauptelektronik als Zähler ausgestaltet.

Gemäß einer Weiterbildung ist der primäre Modulator der Hauptelektronik als Gegentaktendstufe ausgebildet ist, die mit dem radialen Rotationstransformator und dem Push-Pull-Verstärker als ein Gegentaktflusswandler ausgestaltet.

In einer besonderen Ausgestaltung ist der sekundäre Demodulator in der Sensorelektronik zumindest als ein Schwingkreis mit einem Komparator ausgestaltet.

In einer ergänzenden Ausgestaltung weist die Spannungsversorgungseinheit in der Sensorelektronik zumindest ein Gleichrichtelement und zumindest einen Linearregler auf.

Weitere Einzelheiten, Merkmale und Vorteile des Gegenstandes der Erfindung ergeben sich aus der nachfolgenden Beschreibung mit den zugehörigen Zeichnungen, in denen bevorzugte Ausführungsbeispiele der Erfindung dargestellt sind. In den Figuren dargestellte Ausführungsbeispiele der Erfindung sind zur besseren Übersicht und zur Vereinfachung die Elemente, die sich in ihrem Aufbau und/oder in ihrer Funktion entsprechen, mit gleichen Bezugszeichen versehen. Es zeigen:
Fig. 1 ein Ausführungsbeispiel eines Messgeräts zur Ermittlung des Füllstands nach dem Verdrängungsmessprinzip,
Fig. 2 eine schematische Zeichnung eines elektromechanischen Füllstandsmessgeräts,
Fig. 3 eine schematische Zeichnung des erfindungsgemäßen elektromechanischen Füllstandsmessgeräts,
Fig. 4 eine Ansicht des erfindungsgemäßen radialen Rotationstransformators, und

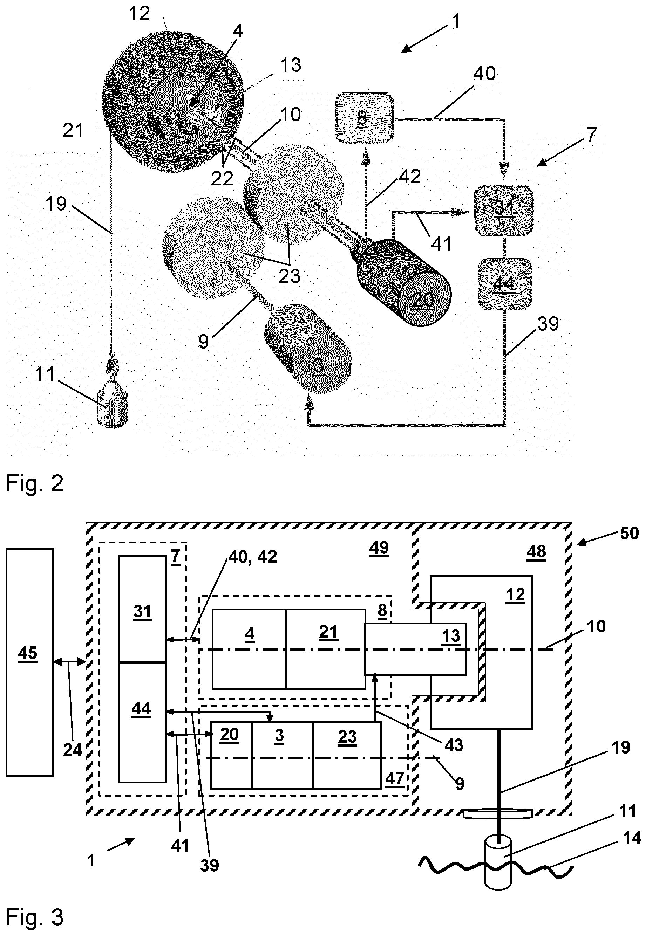

Fig. 3 eine schematische Zeichnung des erfindungsgemäßen elektromechanischen Füllstandsmessgeräts,

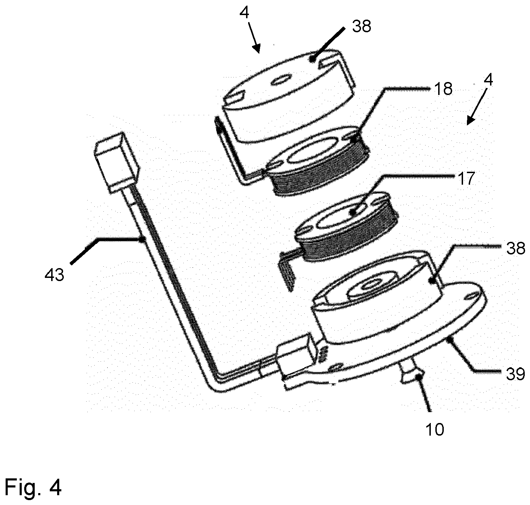

Fig. 4 eine Ansicht des erfindungsgemäßen radialen Rotationstransformators, und

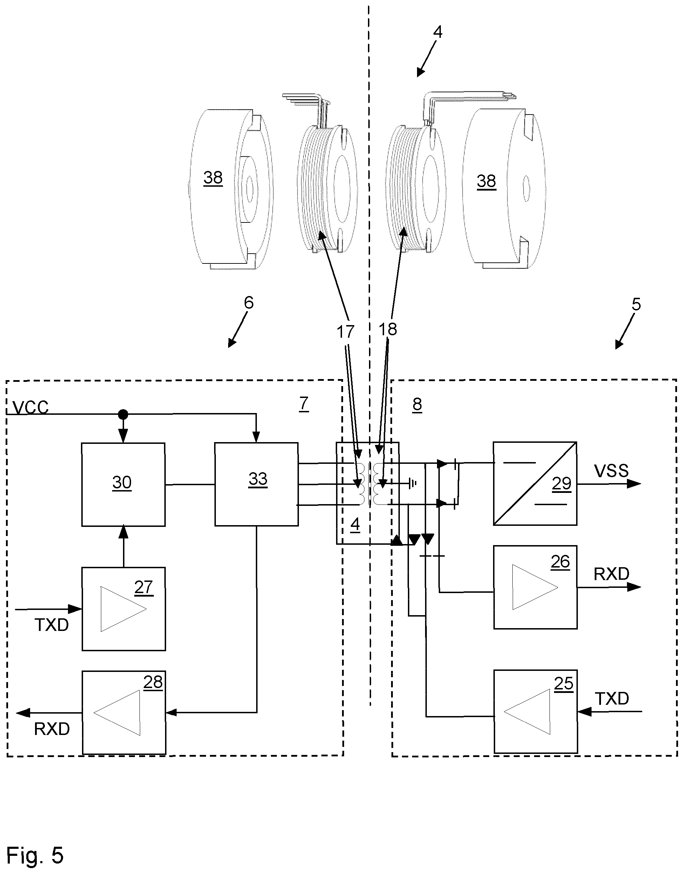

Fig. 5 eine schematische Zeichnung der Modulations- und Demodulationsschaltungen zur Übertragung von Daten und Energie über den erfindungsgemäßen Rotationstransformator.

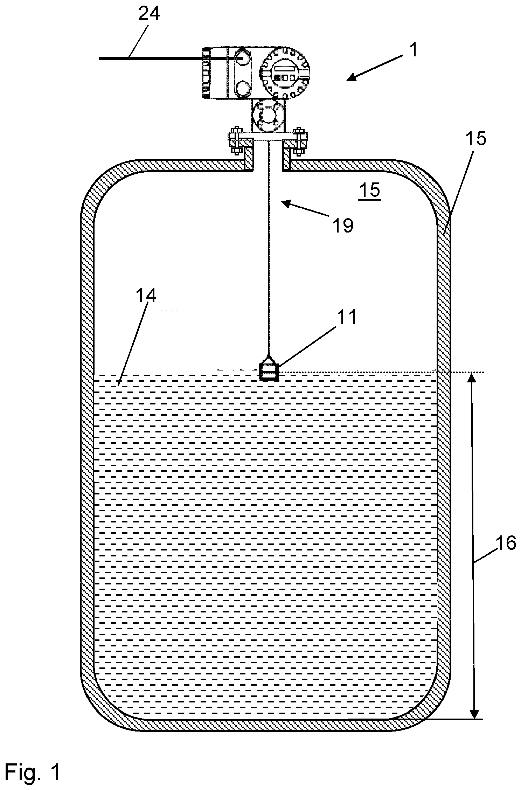

In Fig. 1 ist ein mechanisches Füllstandsmessgerät 1 gezeigt, das beispielsweise von der Anmelderin unter dem Namen PROSERVO NMS 53x - Tankmesssystem vertreiben wird und auf dem Prinzip der Verdrängungsmessung eines Verdrängerelements 11 basiert. Ein kleines Verdrängerelement 11 wird mit Hilfe eines Servomotors 3 an einem Messseil 19 präzise in der Flüssigkeit 14 im Behälter 15 positioniert. Sobald der Füllstand 16 der Flüssigkeit 14 im Behälter 15 steigt oder fällt, wird die Position des Verdrängerelements 11 vom Servomotor 3 durch drehen der Messwelle 10 mit der Messtrommel 12,13 nachgeführt. Die Drehung der Messtrommel 12,13 wird ausgewertet um den Füllstand 16 zu ermitteln. Auch die Ermittlung weiterer Messgrößen wie Trennschicht- und Dichtemessung der einzelnen Schichten des Füllguts 14 kann mit diesem Messprinzip durchgeführt werden.

In modernen Industrieanlagen sind Feldgeräte in der Regel über Bussysteme 24, wie beispielsweise über Profibus® PA, Foundation Fieldbus® oder HART® mit zumindest einer übergeordneten Steuereinheit, die hier nicht explizit gezeigt ist, verbunden. Die von der Steuereinheit gesteuerte Datenkommunikation auf dem Bussystem 24 kann sowohl drahtgebunden als auch drahtlos erfolgen. Normalerweise handelt es sich bei der übergeordneten Steuereinheit um eine SPS bzw. eine PLC (Programmable Logic Controller) oder um eine DCS (Distributed Control System). Die übergeordnete Steuereinheit dient zur Prozesssteuerung, zur Prozessvisualisierung, zur Prozessüberwachung sowie zur Inbetriebnahme und Bedienung der Feldgeräte.

Eine SCADA-Software (Supervisory Control and Data Acquisition) in der Steuereinheit zur Überwachung und Steuerung von technischen Prozessen berechnet die beispielsweise die Masse der Flüssigkeits- und Gasphase von Flüssiggasen als Füllgut 14 aus den Messwerten Füllstand, Druck, Temperatur und natürlich der Dichte. Der über dem Proservo gemessene Füllstand wird beispielsweise auf einen Feldbus 24 ausgegeben und beispielsweise von einem Endress+Hausser eingesetzte Feldbusinterface (RTU 8130) eingelesen. Die anderen Prozessdaten, Druck und Temperatur, gelangen über die OPC Client/Server Schnittstelle ins Überwachungssystem. Nachdem die Daten dort berechnet werden, stehen sie dem Leitsystem zur Verfügung.

In Fig. 2 ist ein Füllstandsmessgerät 1 gezeigt, welches nach dem Verdrängerprinzip eines Verdrängerelements bzw. Schwimmers 11 arbeitet. Das Verdrängerelement bzw. der Schwimmer 11 ist an einem Ende eines Messseils bzw. Messdrahtes 19 befestigt und das andere Ende des Messseils 19 ist meist einlagig auf einer äußeren Seiltrommel 12 bzw. äußeren Messtrommel 12 aufgewickelt.

Ein kleines Verdrängerelement 11 wird mit Hilfe eines kleinen Servomotors 3 präzise in der Flüssigkeit bzw. in dem flüssigen Füllgut 14 positioniert. Das Verdrängungselement 11 hängt an einem Messdraht bzw. -seil 19, der auf eine mit feinen Rillen versehene Messtrommel bzw. äußere Seiltrommel 12 im Innern des Messgeräts 1 mit gleich bleibendem Wicklungsdurchmesser einlagig aufgewickelt ist. Die äußere Seiltrommel 12 wird beispielsweise über Koppelmagnete mit der inneren Seiltrommel 13 gekoppelt, die durch das Trommelgehäuse 48 vollständig und hermetisch dicht voneinander räumlich getrennt sind. Die äußeren Magneten sind mit der äußeren Seiltrommel 12 verbunden, die inneren Magneten mit der inneren Seiltrommel 13. Während sich die Magneten drehen, veranlasst die magnetische Anziehungskraft die äußeren Magneten, sich mitzudrehen, so dass die gesamte Trommelbaugruppe aus äußerer Seiltrommel 12 und innerer Seiltrommel 13 auf der Messwelle 10 rotiert.

Während sich die Magnete mit der inneren Seiltrommel 13 drehen, veranlasst die magnetische Anziehungskraft, dass sich die äußeren Magnete auf der äußeren Seiltrommel 12 mitdrehen, sodass die gesamte Trommelbaugruppe rotiert. Durch das Gewicht des Verdrängerelements 11 am Messdraht 19 wirkt ein Drehmoment auf den äußeren Magneten, wodurch es zu einer Änderung des magnetischen Flusses kommt. Diese zwischen den Komponenten der Messtrommeln 12, 13 wirkenden Magnetfeld-Änderungen werden von einem speziellen elektromagnetischen Messwandler 21,z. B. einem Hallsensor, auf der Inneren Messtrommel 13 erfasst. Das Messwandlersignal 42 der Messwandler 21 wird über Sensorsignalleitungen 22 entlang der Messwelle 10 zu einem Schleifkontakt nach dem Getriebe 23 geführt, wo das Messwandlersignal 42 von der Sensorelektronik 8 in ein Gewichtsmesssignal 40 weiterverarbeitet wird. Diese Gewichtsmesssignal 40 wird mit dem Positionsdatensignal 41 eines auf der Messwelle 10 befindlichen Enkoders bzw. Kodieres 20 von einem Mikroprozessor 31 in der Hauptelektronik 7 ausgewertet und ein entsprechendes Motorsteuersignal 39 an den Antriebsmotor 3 übermittelt. Der Antriebsmotor 3 wird so von dem Motorsteuersignal 39 angesteuert, dass die durch die Änderungen des magnetischen Flusses erzeugte Spannung an dem Messwandler 21 an die durch den Betätigungsbefehl vorgegebene Spannung angeglichen wird. Wenn sich der Verdrängerelement 11 absenkt und auf der Oberfläche der Flüssigkeit 14 aufsetzt, wird das Gewicht des Verdrängerelements 11 durch die Auftriebskraft der Flüssigkeit 14 vermindert. Dadurch ändert sich das Drehmoment in der Magnetkupplung zwischen der äußeren Seiltrommel 12 und der inneren Seiltrommel 13. Diese Änderung wird beispielsweise von fünf temperaturkompensierten Hall-Detektor-Chips als Messelement 21 gemessen. Das Positionsdatensignal 41, das die Position des Verdrängerelements 11 anzeigt, wird an die Motorsteuerelektronik 44 in der Hauptelektronik 7, z.B. einen Mikroprozessor 31, übertragen. Sobald der Stand der Flüssigkeit 14 steigt und fällt, wird die Position des Verdrängerelements 11 vom Antriebsmotor 3 mittels eines Getriebes 23 nachgeführt. Die Drehung der Messtrommel 12 wird genau ausgewertet, um den Füllstandswert 16 bis auf +/- 0,7 mm genau zu ermitteln.

Diese Ausgestaltung eines elektromechanischen Füllstandsmessgeräts 1 mit einem an der Messwelle 10 befindlichen Schleifkontakt zur Übertragung des elektrischen Messwandlersignals 42 der elektromagnetischen Messwandlers 21 in der Inneren Seiltrommel 13 an die Hauptelektronik 7, insbesondere die Sensorelektronik 8 mit der Servomotorsteuerung 44 hat den Nachteil, dass dieser mechanische Abgriff des Messwandlersignals 42 über die Schleifkontakte nicht verschleißfrei erfolgt und durch den Reibungswiderstände eine Drehmomentsänderung erzeugt und somit Messungenauigkeiten auftreten können.

In Fig. 3 ist der erfindungsgemäße Füllstandsmessgerät 1 mit einem Rotationstransformator 4 gezeigt. Das Gehäuse 50 des erfindungsgemäßen Füllstandmessgeräts 1 ist ebenfalls in ein Trommelgehäuse bzw. Trommelraum 48 und ein Elektronikraum 49 hermetisch dicht unterteilt. In dem Trommelraum 48 befindet sich eine auf einer Messwelle 10 gelagerte äußere Seiltrommel 12 mit feinen Rillen auf die mit gleich bleibendem Wicklungsdurchmesser ein Messdraht 19 einlagig aufgewickelt ist. Die äußere Seiltrommel 12 ist über Koppelmagnete mit der inneren Seiltrommel 13 durch die Wand des Trommelgehäuses 48 hindurch magnetmechanisch gekoppelt. Die äußeren Magneten sind mit der äußeren Seiltrommel 12 verbunden, die inneren Magneten mit der inneren Seiltrommel 13, die sich im Elektronikraum 49 auf der Messwelle 10 gelagert, befindet. Die Messwellen 10 der äußeren Seiltrommel 12 und der Inneren Seiltrommel 13 sind getrennt, jedoch liegen beide exakt auf derselben Drehachse. Während sich die Magneten drehen, veranlasst die magnetische Anziehungskraft die äußeren Magneten der äußeren Seiltrommel 12, die innere Seiltrommel 13 sich mitzudrehen, so dass die gesamte Trommelbaugruppe aus äußerer Seiltrommel 12 und innerer Seiltrommel 13 auf der gleichen Drehachse der beiden Messwellen 10 rotiert. Beim Verändern der Position des Verdrängerelements 11 aufgrund der Änderung des Stands der Flüssigkeit 14 wird das Drehmoment in der Magnetkupplung zwischen der äußeren Seiltrommel 12 und der inneren Seiltrommel 13 verändert. Diese Änderung wird beispielsweise von fünf temperaturkompensierten Hall-Detektor-Chips als Messelement 21 als Messwandlersignal 42 in der Inneren Trommel gemessen. Dieses Messwandlersignal 42 wird von der Sensorelektronik 8 über den erfindungsgemäßen Rotationstransformator 4 an die Hauptelektronik 7, insbesondere den Mikroprozessor 31, als ein Gewichtsmesssignal 40 übermittelt.

Aufgrund der guten Übertragungseigenschaften des radialen Rotationstransformators 4 des Gewichtsmesssignals 40 und in Gegenrichtung die Möglichkeit der zuverlässigen Energieversorgung der Sensorelektronik 8 durch die Hauptelektronik 8 ist es möglich die Sensorelektronik 8 direkt innerhalb der inneren Seiltrommel 13 nahe bei den Messelement 21 auszugestalten. Dadurch wird eine exaktere Auswertung der Messelemente 21, insbesondere der Hall-Sensoren, und eine Vorverarbeitung der Messwerte der Messelemente 21 ermöglicht. Es ist auch möglich einen Mikroprozessor 31 auf der Sensorelektronik 8 in der inneren Seiltrommel 13 zu integrieren, so dass die Aufgaben der Ansteuerung der Antriebsmotors 3 durch eine Motorsteuersignal 39, der Kalibrierung der Hall-Sensoren, und sogar die Ermittlung des Füllstands 16 direkt in der Sensorelektronik 8 erfolgen kann.

Auf der Antriebswelle 9 ist in dem Elektronikraum 49 eine Eintriebseinheit 47 mit zumindest einem Antriebsmotor 3, zumindest mit einem Getriebe 23 und zumindest einem Encoder 20 montiert. Über ein Motorsteuersignal 39 der Motorsteuerelektronik 44 in der Hauptelektronik 7 wird der Antriebsmotor 3 angesteuert und treibt über das Getriebe 23 mittels einer Antriebskraft 43 entweder direkt die die innere Seiltrommel 13 oder die Messwelle 10 mit der darauf befindlichen inneren Seiltrommel 13 an. Der Encoder bzw. Kodiere 20 ermittelt die Drehbewegung und übermittelt diese als Positionsdatensignal bzw. Drehbewegungssignal 41 zur Kontrolle oder Regelung an die Motorsteuerung 44 in der Hauptelektronik 7 zurück. Das Füllstandsmessgerät 1 ist über einen Feldbus 24 mit einer Leitstelle 45 verbunden und kommuniziert den Füllstand 16 an die Leitstelle 45.

In Fig. 4 ist der erfindungsgemäße Füllstandsmessgerät 1 mit einem Rotationstransformator 4 mit einer Primärspule 17 und einer Sekundärspule 18 gezeigt. Der radiale Rotationstransformator 4 bei welchem die Primärseite 6 mit einer Primärspule 17 gegenüber der Sekundärseite 7 mit einer Sekundärspule 18 mechanisch frei rotieren kann. Der Rotationstransformators 4 besteht aus einer Sekundärspule 18 als Stator und aus einer Primärspule 17 als auf der Messwelle 10 rotierenden Rotor. Zur Führung des magnetischen Flusses zwischen den beiden Wicklungen dient, wie bei einem herkömmlichen Transformator, ein entsprechend mechanisch zweiteilig ausgestalteter Ferrit-Kern 38 der die Wicklungen umgibt.
Der radiale Rotationstransformator 4 wird in dem erfindungsgemäßen Füllstandsmessgerät 1 zur Signalübertragung zwischen den Messelementen 21 bzw. Sensorelektronik 8 und der Hauptelektronik 7 als auch in Gegenrichtung zur Energieversorgung der Sensorelektronik 8 ausgehend von der Hauptelektronik 7. Die Primärspule 17 und die Sekundärspule 18 sind über einen Luftspalt von ca. 0,3 mm voneinander getrennt, wodurch eine sehr gute Signal- und Energieübertragung über der Rotationstransformator erfolgen kann.

Die Fig. 5 zeigt die erfindungsgemäße Modulations- und Demodulationsschaltungen zur Übertragung von Daten und Energie über den erfindungsgemäßen Rotationstransformator 4. In der DE102007060555A1 ist eine Vorrichtung zur Übertragung von Energie und Daten vermittels eines Übertragers via Last- bzw. Frequenzmodulation über einen Transformator gezeigt. Zur Energieübertragung wird das Prinzip des Gegentaktdurchflusswandlers angewendet, der eine Umwandlung zwischen den bifilar gewickelten, beiden Primärspulen 17 zyklisch mittels eines Push-Pull-Verstärker 33 umgeschaltet wird.
Dadurch wird in dem radialen Rotationstransformator 4 eine wechselnde magnetische Durchflutung der Sekundärspule 18 erzeugt. Aufgrund des Umpolens der Durchflutung in der Primärspule 17 und der Sekundärspule 18 benötigt der radialen Rotationstransformator 4 des Gegentaktflusswandlers deshalb keine Entmagnetisierungswicklung, wie bei Eintakttransformatoren üblich. Die Energieversorgung der Sensorelektronik 8 erfolgt mittels einer Gleichrichtung eines über den radialen Rotationstransformator 4 eingespeisten Wechselsignals durch einen Push-Pull-Verstärker 33. Die über den Rotationsverstärker 4 übertragene Energie wird von Spannungsversorgungseinheit (29) in der Sensorelektronik (8), die zumindest ein Gleichrichtelement (36) und zumindest ein Linearregler (37) aufweist, in die entsprechen Versorgungsspannung umgewandelt.

Die Datenübertragung von der Primärseite 6 auf die Sekundärseite 7 findet durch eine entsprechend auf der Primärseite 6 vorgesehene Frequenzsteuereinheit bzw. Oszillator 30 statt, welche die Arbeitsfrequenz des Rotationstransformator 4 Frequenzumtastungsverfahren geändert wird. Es werden beispielsweise zwei unterschiedliche Frequenzbereiche jeweils mit einer logischen 1 von 160 Kilohertz bzw. einer logischen 0 von 320 Kilohertz von dem Oszillator 30 erzeugt. Dieser Oszillator 30 wird von dem primär Modulator 27 angesteuert und schaltet den Push-Pull-Verstärker 33, der die Umschaltung der Primärspulen 17 durchführt, entsprechend der vorgegebenen Frequenz. Der primäre Modulator 27 der Hauptelektronik 7 ist als Gegentaktendstufe ausgebildet, die mit dem radialen Rotationstransformator 4 und dem Push-Pull-Verstärker 33 als einen Gegentaktflusswandler bilden. Der primäre Modulator 27 und der Oszillator 30 können auch in einem Mikroprozessor 31 der Hauptelektronik 7 integriert und/oder ausgestaltet sein.

Umgekehrt wird die Datenübertragung von der Sekundärseite 7 auf die Primärseite 6 mittels einer Modulation der Last durch einen sekundär Modulator 25 auf der Sekundärseite 7 erzeugt, wodurch auf der Primärseite 6 in dem Übertragungssignal mittels Spannungsspitzen erkannt wird. Diese Laständerung wird auf der Primärseite 1 mittels Spannungsspitzen im Übertragungssignal von einem primären Demodulator 28, der beispielsweise als Zähler 32 ausgestaltet ist, detektiert und ebenfalls entsprechend in logische Signale umgewandelt.

### Bezugszeichenliste

- 1: Füllstandsmessgerät
- 2: Sensorgehäuse
- 3: Schrittmotor, Servomotor, Antriebsmotor
- 4: Radialer Rotationstransformator
- 5: Sekundärseite
- 6: Primärseite
- 7: Hauptelektronik
- 8: Sensorelektronik
- 9: Antriebswelle
- 10: Messwelle
- 11: Verdrängerelement
- 12: Äußere Seiltrommel
- 13: Innere Seiltrommel
- 14: Füllgut, Medium, Flüssigkeit
- 15: Behälter
- 16: Füllstand
- 17: Primärspule
- 18: Sekundärspule
- 19: Messseil, Messdraht
- 20: Kodierer, Encoder
- 21: Messelement, Messwandler
- 22: Sensorsignalleitungen
- 23: Getriebe
- 24: Feldbus, Zweidrahtleitung
- 25: Sekundär Modulator
- 26: Sekundär Demodulator
- 27: Primär Modulator
- 28: Primär Demodulator
- 29: Spannungsversorgung
- 30: Oszillator
- 31: Mikroprozessor, Auswerte- und Steuereinrichtung
- 32: Zähler
- 33: Push-Pull-Verstärker
- 34: Schwingkreis
- 35: Komparator
- 36: Gleichrichtelement
- 37: Linearregler
- 38: Ferritkern
- 39: Motorantriebssignal, Motorsteuersignal
- 40: Gewichtsmesssignals
- 41: Positionsdatensignal
- 42: Messwandlersignal
- 43: Antriebskraft
- 44: Motorsteuerelektronik
- 45: Leitstelle
- 46: Verbindungskabel
- 47: Antriebseinheit
- 48: Trommelraum, Trommelgehäuse
- 49: Elektronikraum
- 50: Gehäuse

## Patentansprüche

1. Elektromechanisches Füllstandmessgerät, enthaltend
- einen Schwimmer bzw. Verdrängerelement, das mittels einem Draht abwickelbar zumindest mit einer äußeren Trommel verbunden ist,
- eine äußere Trommel mit einem äußeren Magnetring,
- eine innere Trommel mit einem inneren Magnetring und elektromagnetischen Messelementen, die eine Magnetfeldverschiebung zwischen der inneren und äußeren Magnetring ermitteln und einen Messwert ausgeben, wobei der innere Magnetring und der äußere Magnetring die äußere Trommel derart mit der inneren Trommel koppeln, um eine Rotation der inneren Trommel auf die äußere Trommel zu übertragen,
- eine Meßwelle, mit der die innere Trommel mechanisch fest verbunden,
- ein Servomotor mit einer Antriebswelle, die mit der Messwelle über ein Getriebe gekoppelt ist, der die die Meßwelle in Abhängigkeit von einem aus dem Differenzwert der Messelemente ermittelten Steuerungssignal nachführt, so dass durch die von einer Änderung des zu messenden Flüssigkeitsniveaus erzeugten Relativbewegung zwischen dem äußeren und inneren Trommel der Differenzwert wieder auf Null zurückgeführt und aus Nachführung der aktuelle Füllstandsmesswert ermittelt wird,
**dadurch gekennzeichnet,**
**dass** eine Sensorelektronik (8) zur Ermittlung des Steuerungssignals aus dem Differenzwert der elektromagnetischen Messelemente (21) auf der Messwelle (10) innerhalb der inneren Trommel (13) angeordnet ist, und
**dass** ein radialer Rotationstransformator (4) auf der Messwelle (10) ausgestaltet ist, der zumindest die Steuerungssignale von der Sensorelektronik (8) an die Hauptelektronik (9) überträgt und zumindest die Sensorelektronik (8) mit der notwendigen Energie versorgt.

2. Elektromechanisches Füllstandsmeßgerät nach Anspruch 1,
**dadurch gekennzeichnet,**
**dass** der radial Rotationstransformator (4) aus einer bifilar gewickelten Primärspule (17) und einer bifilar gewickelten Sekundärspule (18) ausgestaltet ist.

3. Elektromechanisches Füllstandsmeßgerät nach zumindest einem der Ansprüche 1 oder 2, **dadurch gekennzeichnet,**
**dass** die Übertragung des Steuerungssignals und/oder Kommunikationssignale zwischen der Sensorelektronik (8) und einer Hauptelektronik (9) mittels Frequenzumtastungsmodulation (FSK) digital über den radialen Rotationstransformator (4) ausgestaltet sind.

4. Elektromechanisches Füllstandsmeßgerät nach Anspruch 1,
**dadurch gekennzeichnet,**
**dass** die Energieversorgung der Sensorelektronik (8) mittels einer Gleichrichtung eines über den radialen Rotationstransformator (4) eingespeisten Wechselsignals erfolgt.

5. Elektromechanisches Füllstandsmeßgerät nach Anspruch 3,
**dadurch gekennzeichnet,**
**dass** die Auswertung der Differenzwerte der elektromagnetischen Messelemente (21) und die Berechnung des Steuerungssignals in der Sensorelektronik (8) ausgestaltet sind und eine digitale Übertragung über den Rotationstransformator (4) vorgesehen ist.

6. Elektromechanisches Füllstandsmeßgerät nach zumindest einem der Ansprüche 4 oder 5,
**dadurch gekennzeichnet,**
**dass** die Sensorelektronik (8) zumindest einen sekundäre Demodulator (26), einen sekundären Modulator (25) und eine Spannungsversorgungseinheit (29) umfasst.

7. Elektromechanisches Füllstandsmeßgerät nach zumindest einem der Ansprüche 4 bis 6,
**dadurch gekennzeichnet,**
**dass** in der Hauptelektronik (9) zumindest einen primären Demodulator (28), einen primären Modulator (27) und eine Oszillator (30) umfasst.

8. Elektromechanisches Füllstandsmeßgerät nach Anspruch 7,
**dadurch gekennzeichnet,**
**dass** der primäre Modulator (27) und der Oszillator (30) in einem Mikroprozessor (31) der Hauptelektronik (9) integriert und/oder ausgestaltet sind.

9. Elektromechanisches Füllstandsmeßgerät nach Anspruch 7,
**dadurch gekennzeichnet,**
**dass** der primäre Demodulator (28) in der Hauptelektronik (9) als Zähler (32) ausgestaltet ist.

10. Elektromechanisches Füllstandsmeßgerät nach Anspruch 7,
**dadurch gekennzeichnet,**
**dass** der primäre Modulator (27) der Hauptelektronik (9) als Gegentaktendstufe ausgebildet ist, die mit dem radialen Rotationstransformator (4) und dem Push-Pull-Verstärker (33) als ein Gegentaktflusswandler ausgestaltet ist.

11. Elektromechanisches Füllstandsmeßgerät nach Anspruch 6,
**dadurch gekennzeichnet,**
**dass** der sekundäre Demodulator (26) in der Sensorelektronik (8) zumindest als ein Schwingkreis (34) mit einem Komparator (35) ausgestaltet ist, und
**dass** die Spannungsversorgungseinheit (29) in der Sensorelektronik (8) zumindest ein Gleichrichtelement (36) und zumindest ein Linearregler (37) aufweist.

## Claims

1. Electromechanical level transmitter, comprising
- a float or displacement element which is connected at least to an external drum via a wire that can be unwound,
- an outer drum with an outer magnetic ring,
- an inner drum with an inner magnetic ring and electromagnetic measuring elements, which determine a magnetic field shift between the inner and outer magnetic ring and output a measured value, wherein the inner magnetic ring and the outer magnetic ring couple the outer drum with the inner drum in such a way that transmits a rotation of the inner drum to the outer drum,
- a measuring shaft to which the inner drum is mechanically connected in a fixed manner,
- a servomotor with a drive shaft, which is coupled to the measuring shaft via a transmission, wherein said servomotor readjusts the measuring shaft depending on a control signal determined from the differential value of the measuring elements in such a way that, as a result of a relative movement between the outer and inner drum - which is generated by a change in the level of liquid to be measured - the differential value is returned to zero and the current level measurement value is determined from the readjustment,
**characterized in that**
sensor electronics (8) are arranged on the measuring shaft (10) inside the inner drum (13) for the purpose of determining the control signal from the differential value of the electromagnetic measuring elements (21), and
**in that** a radial rotary transformer (4) is arranged on the measuring shaft (10) which at least transmits the control signals from the sensor electronics (8) to the main electronics (9) and at least supplies the sensor electronics (8) with the necessary energy.

2. Electromechanical level transmitter as claimed in Claim 1,
**characterized in that**
the radial rotary transformer (4) is developed from a bifilar wound primary coil (17) and a bifilar wound secondary coil (18).

3. Electromechanical level transmitter as claimed in at least one of the Claims 1 or 2,
**characterized in that**
the transmission of the control signal and/or the communication signals between the sensor electronics (8) and a main electronics system (9) is implemented digitally by means of frequency shift keying (FSK) modulation via the radial rotary transformer (4).

4. Electromechanical level transmitter as claimed in Claim 1,
**characterized in that**
power is supplied to the sensor electronics (8) via a rectification of an alternating signal supplied via the radial rotary transformer (4).

5. Electromechanical level transmitter as claimed in Claim 3,
**characterized in that**
the evaluation of the differential values of the electromagnetic measuring elements (21) and the calculation of the control signal are performed in the sensor electronics (8) and digital transmission via the rotary transformer (4) is envisaged.

6. Electromechanical level transmitter as claimed in at least one of the Claims 4 or 5,
**characterized in that**
the sensor electronics (8) comprise at least a secondary demodulator (26), a secondary modulator (25) and a power supply unit (29).

7. Electromechanical level transmitter as claimed in at least one of the Claims 4 to 6,
**characterized in that**
the main electronics (9) comprise at least a primary demodulator (28), a primary modulator (27) and an oscillator (30).

8. Electromechanical level transmitter as claimed in Claim 7,
**characterized in that**
the primary modulator (27) and the oscillator (30) are integrated and/or organized in a microprocessor (31) of the main electronics (9).

9. Electromechanical level transmitter as claimed in Claim 7,
**characterized in that**
the primary demodulator (28) in the main electronics (9) is designed as a meter (32).

10. Electromechanical level transmitter as claimed in Claim 7,
**characterized in that**
the primary modulator (27) of the main electronics (9) is developed as a push-pull output which, with the radial rotary transformer (4) and the push-pull amplifier, is designed as a push-pull converter.

11. Electromechanical level transmitter as claimed in Claim 6,
**characterized in that**
the secondary demodulator (26) in the sensor electronics (8) is designed at least as a resonant circuit (34) with a comparator (35), and **in that** the power supply unit (29) in the sensor electronics (8) has at least one rectifier element (36) and at least one linear regulator (37).

## Revendications

1. Transmetteur de niveau électromécanique, comprenant
- un flotteur ou un élément de déplacement, qui est relié au moyen d'un fil déroulable avec un tambour extérieur,
- un tambour extérieur muni d'un anneau magnétique extérieur,
- un tambour intérieur muni d'un anneau magnétique intérieur et d'éléments de mesure électromagnétiques, qui déterminent un décalage du champ magnétique entre l'anneau magnétique intérieur et l'anneau magnétique extérieur, et délivrent une valeur mesurée, l'anneau magnétique intérieur et l'anneau magnétique extérieur couplant le tambour extérieur avec le tambour intérieur de telle sorte à transmettre une rotation du tambour intérieur au tambour extérieur,
- un arbre de mesure, avec lequel le tambour intérieur est relié mécaniquement de façon fixe,
- un servomoteur avec un arbre d'entraînement, qui est couplé avec l'arbre de mesure par l'intermédiaire d'un engrenage, lequel moteur réajuste l'arbre de mesure en fonction d'un signal de commande déterminé à partir de la valeur différentielle des éléments de mesure, de telle sorte que, grâce au mouvement relatif entre le tambour extérieur et le tambour intérieur, généré par une modification du niveau de liquide à mesurer, la valeur différentielle est ramenée à zéro et la mesure de niveau actuelle est déterminée à partir du réajustage,
**caractérisé**
**en ce qu'**est disposée dans le tambour intérieur (13) une électronique de détection (8) destinée à la détermination du signal de commande à partir de la valeur différentielle des éléments de mesure électromécaniques (21) sur l'arbre de mesure (10), et
**en ce qu'**est disposé sur l'arbre de mesure (10) un transformateur de rotation radial (4), qui transmet au moins les signaux de commande depuis l'électronique de détection (8) à l'électronique principale (9) et alimente au moins l'électronique de détection (8) avec l'énergie nécessaire.

2. Transmetteur de niveau électromécanique selon la revendication 1,
**caractérisé**
**en ce que** le transformateur de rotation radial (4) est conçu à partir d'une bobine primaire (17) à suspension bifilaire et d'une bobine secondaire (18) à suspension bifilaire.

3. Transmetteur de niveau électromécanique selon au moins l'une des revendications 1 ou 2,
**caractérisé**
**en ce que** la transmission du signal de commande et/ou des signaux de communication entre l'électronique de détection (8) et une électronique principale (9) est réalisée au moyen d'une modulation par déplacement de fréquence (FSK) numérique par l'intermédiaire du transformateur de rotation radial (4).

4. Transmetteur de niveau électromécanique selon la revendication 1,
**caractérisé**
**en ce que** l'alimentation en énergie de l'électronique de détection (8) est réalisée au moyen d'un redressement d'un signal alternatif alimenté par l'intermédiaire du transformateur de rotation radial (4).

5. Transmetteur de niveau électromécanique selon la revendication 3,
**caractérisé**
**en ce que** l'exploitation des valeurs différentielles des éléments de mesure électromagnétiques (21) et le calcul du signal de commande sont réalisés dans l'électronique de détection (8) et en ce qu'est prévue une transmission numérique par l'intermédiaire du transformateur de rotation (4).

6. Transmetteur de niveau électromécanique selon au moins l'une des revendications 4 ou 5,
**caractérisé**
**en ce que** l'électronique de détection (8) comprend au moins un démodulateur secondaire (26), un modulateur secondaire (25) et une unité d'alimentation en tension (29).

7. Transmetteur de niveau électromécanique selon au moins l'une des revendications 4 à 6,
**caractérisé**
**en ce que** l'électronique principale (9) comprend au moins un démodulateur primaire (28), un modulateur primaire (27) et un oscillateur (30).

8. Transmetteur de niveau électromécanique selon la revendication 7,
**caractérisé**
**en ce que** le modulateur primaire (27) et l'oscillateur (30) sont intégrés et/ou disposés dans un microprocesseur (31) de l'électronique principale (9).

9. Transmetteur de niveau électromécanique selon la revendication 7,
**caractérisé**
**en ce que** le démodulateur primaire (28) intégré dans l'électronique principale (9) est conçu en tant que compteur (32).

10. Transmetteur de niveau électromécanique selon la revendication 7,
**caractérisé**
**en ce que** le modulateur primaire (27) de l'électronique principale (9) est conçu en tant qu'étage final push-pull qui, avec le transformateur de rotation (4) et l'amplificateur push-pull, est conçu en tant que convertisseur de flux symétrique.

11. Transmetteur de niveau électromécanique selon la revendication 6,
**caractérisé**
**en ce que** le démodulateur secondaire (26) intégré dans l'électronique de détection (8) est conçu au minimum en tant que circuit oscillant (34) avec un comparateur (35), et en ce que l'unité d'alimentation en tension (29) intégrée dans l'électronique de détection (8) comporte au minimum un élément redresseur (36) et au minimum un régulateur linéaire (37).
